# EUROPEAN PATENT SPECIFICATION

(11) **EP 0 359 049 B1**
(45) Date of publication and mention of the grant of the patent: **09.11.1994**
(21) Application number: 89116107.7
(22) Date of filing: 31.08.1989
(51) Int. Cl.: G01N 35/00

(54) **Automatic chemistry analyzer**
Vorrichtung zur chemischen Analyse
Dispositif automatique pour effectuer des analyses chimiques

(30) Priority: 16.09.1988 JP 231824/88
(43) Date of publication of application: 21.03.1990
(73) Proprietor: HITACHI, LTD., Chiyoda-ku, Tokyo 100 (JP)
(72) Inventor: Koakutsu, Takahiro, Katsuta-shi Ibaraki 312 (JP); Tagami, Koshin, Katsuta-shi Ibaraki 312 (JP); Matsuoka, Yoshio, Katsuta-shi Ibaraki 312 (JP)
(74) Representative: Altenburg, Udo, Dipl.-Phys.

(56) References cited:
- JP-A- 1 161 155
- US-A- 4 678 755
- PATENT ABSTRACTS OF JAPAN, vol. 11, no. 58 (P-550)[2505], 21st February 1987;& JP-A-61 223 562
- PATENT ABSTRACTS OF JAPAN, vol. 12, no. 233 (P-724)[3080], 5th July 1977;& JP-A-63 25 557
- PATENT ABSTRACTS OF JAPAN, vol. 13, no. 428 (P-936)(3776), 25.09.1989; & JP-A-1 161 155

## Description

### Background of the Invention

The present invention relates to a method and to an automatic chemistry analyzer and more particularly to an automatic chemistry analyzer capable of automatically analyzing a component concentration in a liquid sample.

In a general automatic chemistry analyzer, the most popular one is an apparatus which turns on a power source thereof at the time set by a timer device so as to finish an initial setting processing of the automatic chemistry analyzer which elevate in advance the temperature of a reaction bath to a predetermined temperature and stabilize an optical source and an amplifier at an early stage, and thus shortens the time from when the power source of the automatic chemistry analyzer turns on to when an operator starts an analytical working using the automatic chemistry analyzer.

The Japanese Patent Laid-Open 61-223562/1986 is cited as an example of such apparatus.

But the conventional technique stated above has the following drawbacks.

In order to obtain stable measurement data using the automatic chemistry analyzer, a preparatory processing by an operator with the initial set processing of the automatic chemistry analyzer before starting an analyzation processing is needed, such as rinsing of a reaction cuvette for mixing and reacting a liquid sample with a reagent or reagents and the exchange of water of a reaction bath for keeping constant the temperature of the reaction cuvette.

In the general automatic chemistry analyzer, the operator manually performs the preparatory processing before starting the analyzing and wastes time. In other words, the operator has to instruct the preparatory processing before starting the analyzing such as rinsing of the reaction cuvette and exchange of the water of the reaction bath only after the apparatus enters the stand-by state even though the power source is turned on and the initial setting processing is finished. Therefore the operator is engaged in the automatic chemistry analyzer between the preparatory processing before starting the analyzing is attained.

The preparatory processing before starting the analyzing may sometimes include a plurality of steps and the operator must specify and execute these steps one by one. Therefore, the operator can not instruct next processing until the previous step is completed, this involves lot of idle time and decreases the efficiency of the work.

In addition before turning on the power source, such preparatory processings are also required between stages of an analysis.

### Summary of the Invention

The present invention has been accomplished to overcome the above mentioned problems of the conventional technique.

An object of present invention is to provide an automatic chemistry analyzer which automatically follows a preparatory processing before starting the analyzation processing by the operator after turning on the power source of the automatic chemistry analyzer or the preparatory processing between stages of an analysis, so as to reduce the load of the operator and improve the working efficiency of the automatic chemistry analyzer.

In order to accomplish the object described above, an automatic analyzer and a method according to claims 1 and 2.

### Brief Description of the Drawings

Fig. 1 is a schematic view showing an overall structure of the automatic chemistry analyzer in accordance with the present invention;
Fig. 2 is a schematic diagram of an overall picture showing an operation of the preparatory processing before starting the analyzation processing by the operator in accordance with the present invention;
Fig. 3 is a flow chart for storing the preparatory processing program by using the overall picture shown in Fig. 2 in accordance with the present invention;
Fig. 4 is a flow chart for executing the preparatory processing program stored in a memory by using the flow chart in Fig. 3 in accordance with the present invention;
Fig. 5 is a schematic diagram of registration picture showing a timer operation in accordance with the present invention; and
Fig. 6 is a another flow chart for executing the preparatory processing, in which a rinsing processing program in the preparatory processing programs are executed between a provide required for executing the initial set processing.

### Detailed Description of the Preferred Embodiments

Hereinafter, one embodiment of the present invention will be described with reference to the drawings.

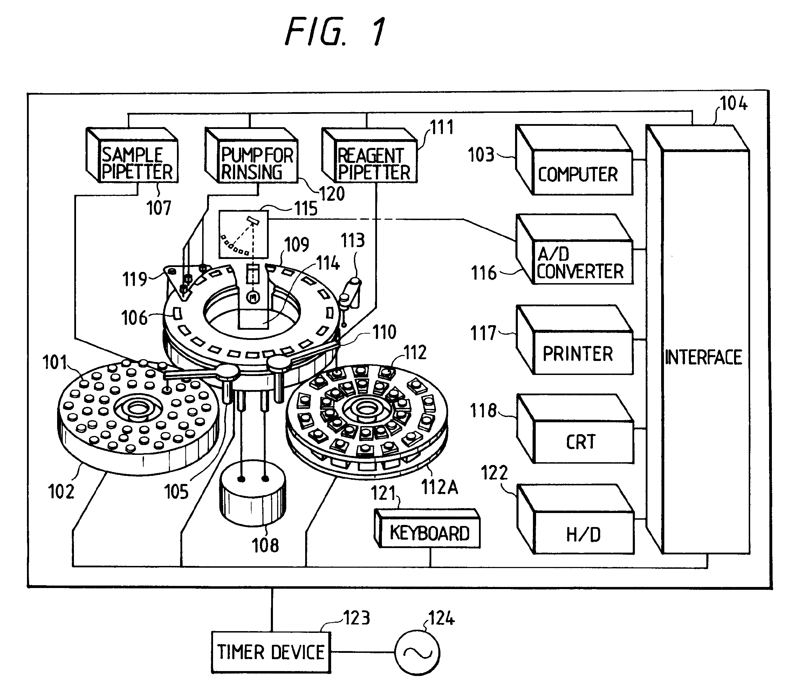

In Fig. 1 which is a schematic view showing the overall structure of the automatic chemistry analyzer in accordance with the present invention, a reaction bath 109 storing therein reaction cuvette 106 is connected to an incuvation bath 108 and is kept a constant temperature. A sample pipetting probe 105 and reagent pipetting probe 110 are disposed outside of the reaction bath 109. The sample pipetting probe 105 is for pouring the sample stored inside a sample cup 101 placed on a sample disc 102 into the reaction cuvette 106. The reagent pipetting probe 110 is for pouring the reagent stored in a reagent bottle 112 placed on a reagent disc 112A into the reaction cuvette 106. The sample pipetting probe 105 is connected to a sample pipetter 107 and the reagent pipetting probe 110 is connected to a reagent pipetter 111. A stirrer 113 and a rinsing unit 119 are disposed outside of the reaction bath 109 in addition to both of these probes 105 and 110. The rinsing unit 119 is connected to pump 120 for rinsing unit 119 is connected to a pump 120 for rinsing the cuvette 106. An optical source 114 and a multi-wavelength photometer 115 are disposed in the proximity of the reaction bath 109. The reaction bath 109, the sample disc 102 and the reagent disc 112 each can rotate freely and the rotation thereof is controlled by a computer 103 through an interface 104. An analog-to-digital converter (hereinafter referred to as the "A/D converter") 116, a printer 117, a CRT 118, a keyboard 121 and a hard disc (hereinafter referred to as "H/D") 122 are connected to the interface 104. The sample pipetter 107, the reagent pipetter 111 and the pump 120 for rinsing the cuvette 106 are connected to the interface 104 and the multi-wavelength photometer 115 is connected to the A/D converter 116. In the drawing, reference numeral 123 represents the timer device and 124 the power source.

In the overall construction described above, a general analyzing processing of the automatic chemistry analyzer which is operated by an operator manually using the keyboard 121 will be explained as follows.

The sample disc 102 rotates and moves to and below the sample pipetting probe 105 in accordance with the sequence of the sample, and predetermined quantity of the sample is poured in the reaction cuvette 106 by the sample pipetter 107 connected to the sample pipetting probe 105. The reaction cuvette 106 into which the sample is dividedly poured moves to the sample adding position in the reaction bath 108. A predetermined reagent sucked from the reagent bottle 112 is added to the reaction cuvette 106 which moved to the reagent adding position, by the reagent pipetter 111 connected to the sample pipetting probe 110. After adding the reagent, the reaction cuvette 106 moves to the position of the stirrer 113, where stirring is effected. The reaction cuvette 106, which is stirred the content passes through the luminous flux emmited from the optical source 114 and absorbancy signal thus detected by the multi-wavelength photometer 115. The absorbancy signal thus detected is applied to the computer 103 through the A/D converter 116 and through the interface 104 and is converted into the concentration of the sample as the object of measurement. The data thus converted into the concentration is printed by the printer 117 through the interface 104 or is displayed on the screen of the CRT and is then stored in the H/D 122. After the finishing of photometry stated above, the reaction cuvette 106 moves to the position of the rinsing unit 119 and after the liquid in the reaction cuvette 106 is discharged by the pump 120 for rinsing the cuvette, the reaction cuvette is rinsed with water to serve for the next analysis.

The object of the present invention is to automatically execute not only an intial setting but a preparatory processing before starting analyzation processing operated manually by the operator, and the initial setting and the preparatory processing will be explained as follows.

When the power source is turned on, the computer 103 reads the initial setting program for activating the analyzer from the H/D 122 and executes it. And, by the initial setting program, the computer 103 executes the initial processing of the peripheral devices (such as the incuvation bath 108, the optical source 114, etc.) so as to set initial data of the peripheral devices and to elevate in advance the temperature of the reaction bath 109 to the predetermined temperature and to stabilize the optical source and makes them stand-by state.

And further, the preparatory processing before starting the analyzation processing by operator's manual operation must be conducted in order to obtain the stable and correct measurement data, and the following represent some programs of such processings. The time shown in the parenthesis( ) represents the necessary time to perform them.
1. Check of photometer (1 ∼ 2 min.)
   Dearated water is poured into predetermined two cuvettes 106, absorbance measurement of the two cuvettes are carried out by using all of the wavelength of the photometer 115 and the data thereof are printed out by the printer 117.
2. Cuvette rinsing (16 ∼ 20 min.)
   The cuvette is moved to the position of the rinsing device 119 where water or a solvent is poured, and after rinsing the cuvette, the water and the solvent is discharged. This is carried out for all the cuvettes.
3. Sample pipetter rinsing (max. 2 min.)
   The sample pipetting probe 105 is moved to the rinsing tank and rinsing with water is carried out several times. Bubbles in the flow path are removed.
4. Reagent probe rinsing (max. 2 min.)
   The reagent probe 110 is moved to the rinsing tank which is not shown in the Figures and carry out suction and drainage several times. Bubbles in the flow path are removed.
5. Cuvette blank measurement (17 ∼ 20 min.)
   After dearated water is charged into the cuvette, absorbancy of the water is measured. This is conducted for all the cuvettes.
6. Water exchange of the reaction bath (approx. 4 min.)
   Drain and supply of water from and into the reaction bath 109 are repeated twice.
7. Reset (about 30 sec.)
   The mechanical system such as plobes, stirrer, rinsing devices, etc. shown in Fig. 1 is moved to the initial set position.

As can be understood from the examples listed above, some of the preparatory processings require an extremely long time, and are processed in an arbitrary combination from time to time. For example, where it is desired to mainly carry out the rinsing processings at first
cuvette rinsing;
sample pipetter rinsing; and
reagent probe rinsing;
are executed continuously.

Furthermore, there is no need for those rinsing processings to wait until the processing of the initial setting are finished, and the preparatory processing can be executed at the same time when the initial setting processing is started to be executed or between the time when the initial setting processing is being executed. The quicker the preparatory processing can be started to be executed, the shorter the total time for executing the initial setting processing and the preparatory processing can be.

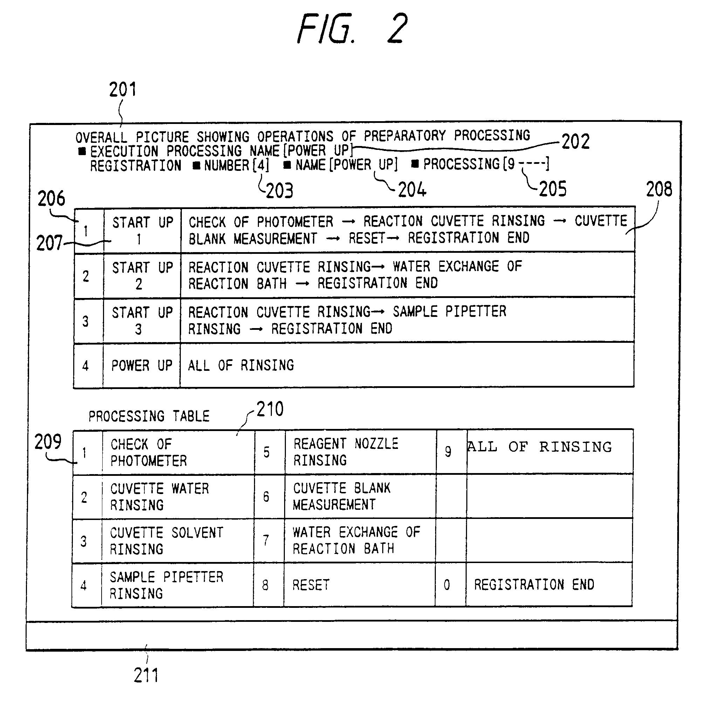

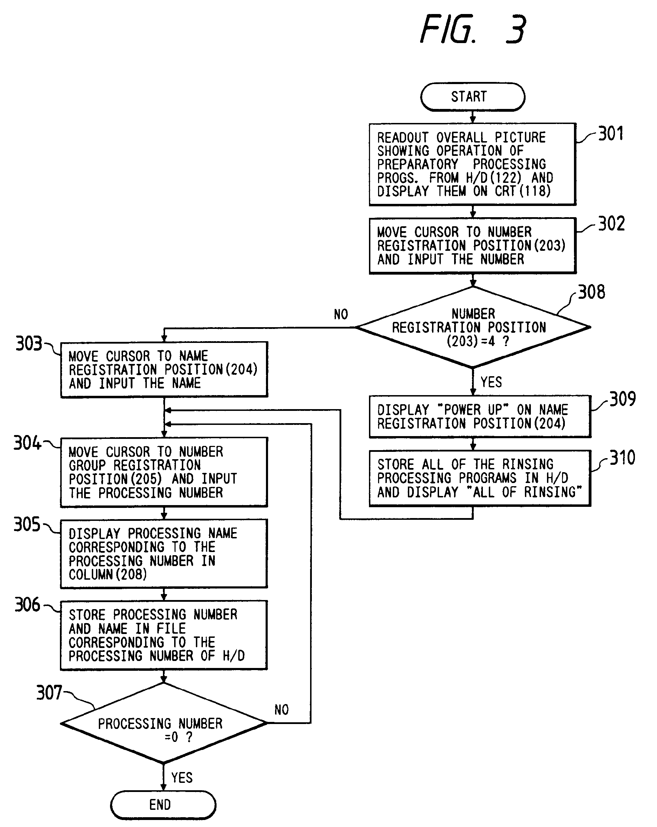

Next, how to store the preparatory processing programs stated above will be explained with reference to Fig. 2 and 3.

First of all, the overall picture showing the programs of the preparatory processing before analyzation processing is read out to the computer 103 from the H/D 122 and is displayed on the CRT 118. The overall picture in Fig. 2 is stored except columns 203, 204, 205, 207 and 208 in the H/D 122 and read out the picture to display on the CRT 118 (step 301 in Fig. 3). A cursor is moved to a number registration position 203 of the processing program and a number of the processing program to be stored is inputted from the keyboard 121, whereby the number is displayed in a number column 206 (step 302 in Fig. 3). At this time, "4" of the number column 206 is only used to store a processing program for turning on the power source of the automatic chemistry analyzer so as to display "power up". The cursor is moved to a processing name registration position 204 and the name of the processing program to be stored is inputted from the keyboard 121, whereby the name is displayed in a processing name column 207 (step 303 in Fig. 3). Then, the cursor is moved to a number group registration position 205 of the processing program and the processing numbers 209 to be stored are inputted one by one from the keyboard 121 by referring to the processing table (step 304 in Fig. 3). When the number registration position 203 is "4" (step 308 in Fig. 3), "power up" is displayed on name column 207 (step 309 in Fig. 3), the number "9" corresponding to all of the rinsing processing programs is displayed on the processing number column 205 so as to store them into H/D, and the column 208 is displayed as "all of rinsing" (step 310 in Fig. 3). Here the processing table is a command to be executed in the preparatory processing before starting the analyzation processing, the processing number 209 and the processing name 210 are displayed therein and these data are previously registered in the H/D 122. The processing name of the processing program displayed in col. 210 corresponding to the inputted processing number 209 is displayed in the column 208 (step 305 in Fig. 3) and the processing number 209 and the processing name 210 selected are stored in the file corresponding to the number of the program processing stored in the H/D 122 (e.g. the file of the number 3 and the name start-up 3 in Fig. 2) (step 306 in Fig. 3).

Such registration of the preparatory processing which is selected as stated above is executed on the day before the automatic chemistry analyzer is started to be used.

Next, the execution of the registered preparatory processing programs will be explained.

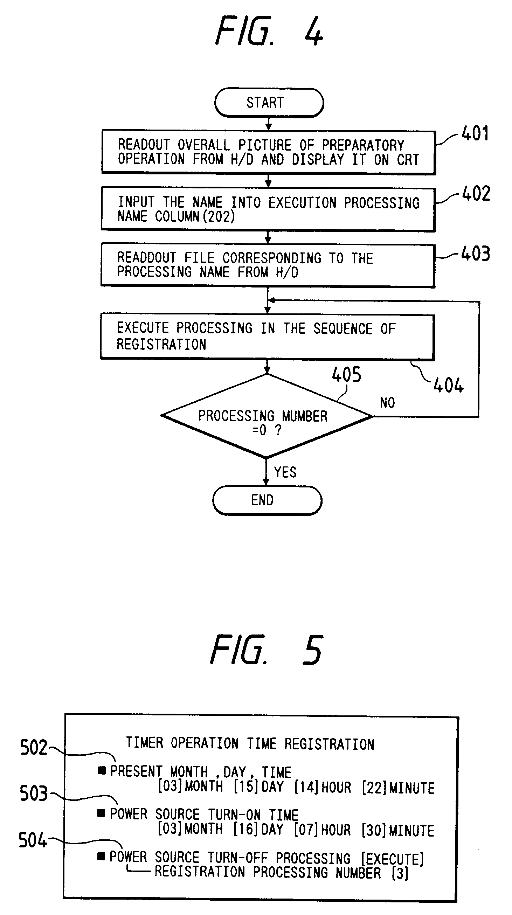

First of all, the overall picture showing the operation of the preparatory processing programs is read out from the H/D 122 to the computer 103 and is displayed on the CRT 118 (step 401 in Fig. 4), and into the execution processing name position 202 in Fig. 2 the name "power up" is inputted (step 402 in Fig. 4). The file corresponding to the processing name is read out from the H/D 122 on the basis of the inputted name (step 403) and processing is executed in the sequence of registration (step 404) and the execution of the preparatory processing is repeated until the executing number reaches 0 (step 405).

By the way, the start timing in order to start to execute the initial setting processing programs is set by a timer so as to start to execute the preparatory processing programs concerning with the starting of the initial setting processing programs as explained in followings.

As described above, the automatic chemistry analyzer in the present invention is connected to the power source 124 through the timer device 123. When the timer device 123 is turned on at the set time, the power source start to supply the electric power to the automatic chemistry analyzer. A time registration picture of the timer operation previously registered is read out by the computer 103 from the H/D 122 and display on the CRT 118 as shown in Fig. 5. Next the item 502 of the present month, day, hour and minute in the picture shown in Fig. 5 are set by reading out them from the timer device 123. Since the present month, day, hour and minute are set once so as to be always updated automatically, it is not necessary to set them again every time. However, they can be set again when any service interruption or time deviation occurs. Then the item 503 of the month, day, hour and minute of the timer operation time in the picture shown in Fig. 5 is set, and at the same time, the month, day, hour and minute of the timer operation time is stored in the timer device 123.

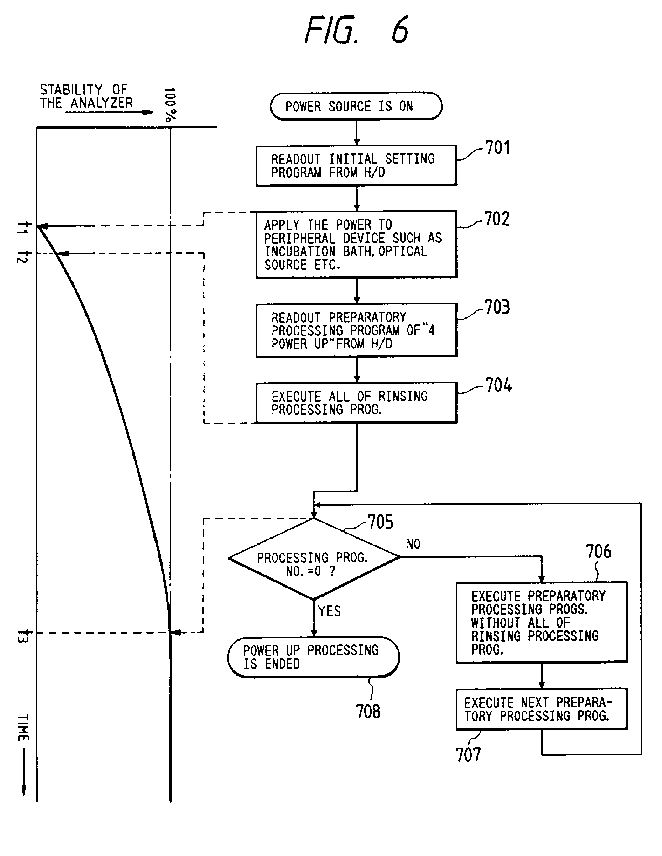

When the present time which is always updated comes to corresponds to the timer operation time in Fig. 5, the timer device 123 is switched on so as to supply the electric power from the power source 124. That is to say, when the item 502 of the present month, day, hour and minute comes to corresponds to the item 503 of the month, day, hour and minute of the timer operation time, the timer device 123 is turned on and the electric power from the power source 124 is supplied to the automatic chemistry analyzer and computer 103 executes the registration processing shown in Fig. 6 at the time of turn-on of the power source 124.

When the timer device 123 is switched on so as to supply the electric power from the power source 124 stated above, initial setting processing program of the automatic chemistry analyzer is read out from the processing file in H/D 122 (step 701 in Fig. 6) and execute it so as to apply the power to the peripheral device such as incuvation bath, optical bath and elevate the temperature of a reaction bath to the predetermined temperature and stabilize the optical source (step 702 in Fig. 6). The relation between the stability of the peripheral device of the automatic chemistry analyzer and the progressing timing t₁, t₂, t₃ of the steps 701, 704, 705 is shown on the left hand side of Fig. 6. And, the computer 103 reads out the preparatory processing program "power up" having processing number "4" from the processing file in the H/D 122 (step 703 in Fig. 6) and executes all of the rinsing processing program having the registration number 2, 3, 4 or 5 (step 704 in Fig. 6).

Usually, it takes about 35 minutes for executing all of the rinsing processing programs and takes about 30 minutes which mean from t₁ to t₃ for building up the stability of the analyzer. So, when executions of all of the rinsing processing programs are finished, the stability of the analyzer is completely built up.

Then the registered preparatory processing programs without all of the rinsing processing programs are executed (step 706 and 707 in Fig. 6), and when "0" is retrieved (step 705 in Fig. 6), the power up processing programs are ended and the automatic chemistry analyzer waits analyzing processing manually ordered by the operator according to the analyzing requests.

Setting for turning off the power source 124 can be accomplished by use of the picture for registering the timer operation time shown in Fig. 5. The processing for registering the turning off of the power source is executed by designating processing number "1 ∼ 3" are registered as shown in the position 504 of the picture in Fig. 5.

Executing of the turning off processing accomplished by selecting "execute" and execute the program of the processing number "3" so as to finish the executing of the turning off processing after rinsing reaction cuvette and sample pipetter. When all of the registration processings are finished, "3" of the overall picture showing operations of the preparatory processing shown in Fig. 2 are sent to the computer 103 to transmit the turn-off time signal of the power source to the timer device 123, and the timer device cut off the power source of the analyzer on the time of the turn-off time signal.

In accordance with the present invention described above, preparatory processings for analyzing are automatically executed and the time for initial setting processing and the preparatory processing can be shortened. Therefore, reduction of the load of the operator and improvement of the working efficiency of the automatic chemistry analyzer can be attained.

## Claims

1. An automatic chemistry analyzer comprising
(a) a reaction bath (109) storing therein reaction cuvettes (106) connected to an incubation bath (108),
(b) an optical source positioned to radiate light through said cuvettes (106),
(c) a photometer (115) for receiving the light after it passes through cuvettes,
(d) a power source (124) for supplying power to the incubation bath (108) and the optical source,
(e) a memory means (122) for memorizing an initial setting program, and preparatory processing programs consisting of rinsing program and other preparatory processing programs,
(f) a timer means (123) for generating a start timing signal, and
(g) a process controlling means for executing the steps of turning on the power source (124) based on the start timing signal from the timer means (123) so as to apply the power to the incubation bath (108) and the optical source, and read out and executed the initial setting program, executing the rinsing program based on the start timing signal so as to rinse the reaction cuvettes, executing other preparatory processing programs after the execution of the rinsing processing program is finished and the incubation bath (108) and the optical source and stabilized, optically analyzing a concentration of the sample liquid in the reaction cuvettes (106) by receiving an absorbancy signal of the sample liquid from the photometer (115) after the other preparatory processing programs are executed, and then rinsing the reaction cuvettes (106) and turning off the power source (124).

2. A method for carrying out an analysis in an automatic chemistry analyzer having a reaction bath (109) for storing therein reaction cuvettes (106) containing a sample liquid to be analyzed, an incubation bath (108) connected to the reaction bath (109), an optical source positioned to radiate light through said cuvettes (106), a photometer (115) for receiving the light after it passes through said cuvettes (106), a power source (124) for the incubation bath (108) and the optical source, a memory means (122) for memorizing an initial setting program and preparatory processing programs consisting of rinsing program and other preparatory processing programs, and a timer means (123) for generating a start timing signal, the method comprising the following steps;
(a) turning on the power source (124) based on the start timing signal from the timer means (123) so as to apply the power to the incubation bath (108) and the optical source, and read out and execute the initial setting program,
(b) executing rinsing program based on the start timing signal so as to rinse the reaction cuvettes (106),
(c) executing other preparatory processing program after the execution of the rinsing processing program is finished and the incubation bath (108) and the optical source and stabilized,
(d) optically analyzing a concentration of the sample liquid in the reaction cuvettes (106) by receiving an absorbancy signal of the sample liquid from the photometer (115) after the other preparatory processing programs are executed, and then
(e) rinsing the reaction cuvettes (106) and turning off the power source (124).

## Patentansprüche

1. Automatische Vorrichtung zur chemischen Analyse, welche aufweist
(a) ein Reaktionsbad (109), das darin Reaktionsküvetten (106) aufnimmt, welches mit einem Inkubationsbad (108) verbunden ist,
(b) eine optische Quelle, die positioniert ist, um Licht durch die Küvetten (106) zu strahlen,
(c) ein Photometer (115) zum Empfangen des Lichtes, nachdem es durch die Küvetten durchgelaufen ist,
(d) eine Leistungsquelle (124) zum Zuführen von Leistung zu dem Inkubationsbad (108) und der optischen Quelle,
(e) eine Speichereinrichtung (122) zum Speichern eines Startsetzprogramms und von Vorbereitungsverarbeitungsprogrammen, die aus einem Spülprogramm (rinsing program) und anderen Vorbereitungsverarbeitungsprogrammen bestehen,
(f) eine Zeitabfolgeneinrichtung (123) zum Generieren eines Startzeitabfolgensignals, und
(g) eine Prozeßsteuereinrichtung zum Ausführen der Schritte des Einschaltens der Leistungsquelle (124), basierend auf dem Startzeitabfolgensignal von der Zeitabfolgeneinrichtung (123) in der Weise, daß die Leistung zu dem Inkubationsbad (108) und der optischen Quelle zugeführt wird, zum Auslesen und Ausführen des Startsetzprogramms, Ausführen des Spülprogramms (rinsing program) basierend auf dem Startzeitabfolgensignal in der Weise, daß die Reaktionsküvetten gespült werden, Ausführen anderer Vorbereitungsverarbeitungsprogramme, nachdem die Ausführung des Spülverarbeitungsprogramms beendet ist und das Inkubationsbad (108) und die optische Quelle stabilisiert sind, optisches Analysieren einer Konzentration einer Probeflüssigkeit in den Reaktionsküvetten (106) durch Empfangen eines Absorptionssignals der Probenflüssigkeit von dem Photometer (115), nachdem die anderen Vorbereitungsverarbeitungsprogramme ausgeführt sind, und dann Spülen der Reaktionsküvetten (106) und Abschalten der Leistungsquelle (124).

2. Verfahren zum Ausführen einer Analyse in einer automatischen Vorrichtung zur chemischen Analyse mit einem Reaktionsbad (109) das darin Reaktionsküvetten (106) aufnimmt, die eine zu analysierende Probenflüssigkeit enthalten, mit einem Inkubationsbad (108), das mit dem Reaktionsbad (109) verbunden ist, einer optischen Quelle, die positioniert ist, um Licht durch die Küvetten (106) zu strahlen, einem Photometer (115) zum Empfangen des Lichtes, nachdem es durch die Küvetten durchgelaufen ist, einer Leistungsquelle (124) für das Inkubationsbad (108) und die optische Quelle, einer Speichereinrichtung (122) zum Speichern eines Startsetzprogramms und von Vorbereitungsverarbeitungsprogrammen, die aus einem Spülprogramm und anderen Vorbereitungsverarbeitungsprogrammen bestehen, und einer Zeitabfolgeneinrichtung (123) zum Generieren eines Startzeitabfolgensignals, wobei das Verfahren die folgenden Schritte aufweist:
(a) Einschalten der Leistungsquelle (124) basierend auf dem Startzeitabfolgensignal, um Leistung zum dem Inkubationsbad (108) und der optischen Quelle zuzuführen, und um das Startsetzprogramm auszulesen und auszuführen,
(b) Ausführen des Spülprogramms basierend auf dem Startzeitabfolgensignal, um die Reaktionsküvetten zu spülen,
(c) Ausführen anderer Vorbereitungsverarbeitungsprogramme, nachdem die Ausführung des Spülverarbeitungsprogramms beendet ist und das Inkubationsbad (108) und die optische Quelle stabilisiert sind,
(d) optisches Analysieren einer Konzentration einer Probenflüssigkeit in den Reaktionsküvetten (106) durch Empfangen eines Absorptionssignals der Probenflüssigkeit von dem Photometer (115), nachdem die anderen Vorbereitungsverarbeitungsprogramme ausgeführt sind, und dann
(e) Spülen der Reaktionsküvetten (106) und Abschalten der Leistungsquelle (124).

## Revendications

1. Dispositif automatique d'analyse chimique comprenant
(a) un bain de réaction (109), dans lequel sont placées des cuvettes de réaction (106), raccordé à un bain d'incubation (108),
(b) une source optique positionnée de manière à envoyer une lumière à travers lesdites cuvettes (106),
(c) un photomètre (115) pour recevoir la lumière après qu'elle ait traversé des cuvettes,
(d) une source d'énergie (124) pour fournir de l'énergie au bain d'incubation (108) et à la source optique,
(e) des moyens de mémoire (122) pour mémoriser un programme de réglage initial, et des programmes de traitement préparatoire constitués par un programme de rinçage et d'autres programmes de traitement préparatoire,
(f) des moyens formant horloge (123) pour produire un signal de déclenchement de démarrage, et
(g) des moyens de commande de processus pour exécuter les étapes de mise en marche de la source d'énergie (124) sur la base du signal de déclenchement de démarrage délivré par les moyens formant horloge (123) de manière à fournir de l'énergie au bain d'incubation (108) et à la source optique et lire et exécuter le programme de réglage initial, exécuter le programme de rinçage sur la base du signal de déclenchement de démarrage pour rincer les cuvettes de réaction, exécuter d'autres programmes de traitement préparatoire après l'exécution du programme une fois que l'exécution du programme de traitement de rinçage est terminée et que le bain d'incubation (108) et la source optique sont stabilisés, analyser optiquement une concentration de l'échantillon liquide dans les cuvettes de réaction (106) au moyen de la réception d'un signal d'absorbance de l'échantillon liquide, provenant du photomètre (115) après que les autres programmes de traitement préparatoire ont été exécutés, puis rincer les cuvettes de réaction (106) et arrêter la source d'énergie (124).

2. Procédé pour exécuter une analyse dans un dispositif automatique d'analyse chimique comportant un bain de réaction (109) servant à recevoir des cuvettes de réaction (106) contenant un échantillon liquide devant être analysé, un bain d'incubation (108) raccordé au bain de réaction (109), une source optique positionnée de manière à envoyer une lumière à travers lesdites cuvettes (106), un photomètre (115) pour recevoir la lumière après qu'elle ait traversé lesdites cuvettes (106), une source d'énergie (124) pour le bain d'incubation (108) et la source optique, des moyens de mémoire (122) pour mémoriser un programme de réglage initial et des programmes de traitement préparatoire constitués par un programme de rinçage et d'autres programmes de traitement préparatoire, et des moyens formant horloge (123) pour produire un signal de déclenchement de démarrage, le procédé comprenant les étapes suivantes :
(a) mise en marche de la source d'énergie (124) sur la base du signal de déclenchement de démarrage à partir des moyens formant horloge (123) de manière à fournir de l'énergie au bain d'incubation (108) et à la source optique et lire et exécuter le programme de réglage initial,
(b) exécution d'un programme de rinçage sur la base du signal de déclenchement de démarrage de manière à rincer les cuvettes de réaction (106),
(c) exécution d'un autre programme de traitement préparatoire une fois que le programme de traitement de rinçage est terminé et que le bain d'incubation (108) et la source optique sont stabilisés,
(d) l'analyse optique d'une concentration de l'échantillon liquide dans les cuvettes de réaction (106) au moyen de la réception d'un signal d'absorbance de l'échantillon liquide en provenance du photomètre (115) un fois que les autres programmes de traitement opératoire ont été exécutés, puis
(e) rinçage des cuvettes de réaction (106) et arrêt de la source d'énergie (124).
